# EUROPEAN PATENT SPECIFICATION

(11) **EP 4 169 792 B1**
(45) Date of publication and mention of the grant of the patent: **02.04.2025**
(21) Application number: 22203277.3
(22) Date of filing: 24.10.2022
(51) Int. Cl.: B60W 40/06, B60W 40/068, B60W 40/076

(54) **METHOD FOR RECOGNIZING ROUGHNESS OF ROAD ON WHICH VEHICLE IS TRAVELING, VEHICLE AND STORAGE MEDIUM**
VERFAHREN ZUR ERKENNUNG DER RAUHEIT EINER STRASSE, AUF DER EIN FAHRZEUG FÄHRT, FAHRZEUG UND SPEICHERMEDIUM
PROCÉDÉ DE RECONNAISSANCE DE RUGOSITÉ DE ROUTE SUR LAQUELLE UN VÉHICULE SE DÉPLACE, VÉHICULE ET SUPPORT D'INFORMATIONS

(30) Priority: 25.10.2021 CN 202111240539
(43) Date of publication of application: 26.04.2023
(73) Proprietor: Nio Technology (Anhui) Co., Ltd, Hefei City, Anhui 230601 (CN)
(72) Inventor: WU, Liren, Hefei, Anhui, 230601 (CN); DENG, Shengwei, Hefei, Anhui, 230601 (CN); WEI, Qiang, Hefei, Anhui, 230601 (CN); ZHANG, Xianhui, Hefei, Anhui, 230601 (CN); YUAN, Da, Hefei, Anhui, 230601 (CN); XIAO, Bohong, Hefei, Anhui, 230601 (CN)
(74) Representative: Vossius & Partner Patentanwälte Rechtsanwälte mbB

(56) References cited:
- DE-A1- 102017 007 122
- KR-A- 20100 027 797
- US-A1- 2016 185 350
- US-A1- 2017 297 563
- US-A1- 2020 377 096

## Description

### Technical Field

The invention relates to the field of vehicle technologies, and in particular, to a method for recognizing roughness of a road on which a vehicle is traveling, a vehicle, and a computer-readable storage medium.

### Background Art

Speed control of a vehicle under a low-speed condition has been one of problems faced by the automotive industry. At present, many vehicles have been configured with advanced functions such as intelligent assisted driving, autonomous driving, etc. These functions have stricter or more comprehensive requirements for low-speed driving control of the vehicle, so as to improve speed stability of the vehicle when traveling on an uneven road, thereby avoiding damages to the vehicle and people. For example, when traveling uphill or downhill or crossing over a general obstacle (such as a speed bump, gravels, etc.), the vehicle should be able to detect this situation in a timely manner and adjust a vehicle speed accordingly; and when encountering an obstacle (such as a larger stone, etc.) that cannot be crossed over, the vehicle should also be able to detect this situation in a timely manner and brake.

In the prior art, there are provided some solutions for detecting roughness of a road on which a vehicle is traveling, which mainly includes the following two types of technical solutions:
The first type of solution is to use the road cross-section type roughness detection technology, in which, coordinate values of the road are collected by using a laser ranging sensor and an inclinometer based on a longitudinal cross-section shape of the road, to generate a road cloud map. Although using this type of solution can improve the detection accuracy of the road roughness, the disadvantage of the solution lies in that it has a low efficiency, and a damage condition of the road in an actual use process cannot be updated in a timely manner.

The second type of solution is to use the response type detection technology, in which, the road roughness is recognized by simulating and calculating a relationship between a vertical acceleration of a mass center of a vehicle and a pitch angle acceleration based on a multiple-degree-of-freedom vehicle model. Although the roughness of a current road can be detected in real time by using the above solutions, due to a lot of noise from vertical vibration of the vehicle and different frequencies, the recognition accuracy is not high enough, making it difficult to objectively and accurately determine the roughness of the road.

US 2020/377096 A1 discloses a system for controlling creep running of a vehicle equipped with an engine and a transmission which includes a driving information detection unit which detects driving information of the vehicle, an engine controller for controlling an output torque of the engine, and a vehicle control unit controlling the engine controller to output a basic creep driving torque. When the vehicle is on a sloped road of more than a predetermined inclination, a first additional driving torque corresponding to an inclination of the sloped road is further output. US 2016/185350 A1 discloses a vehicle speed control system operable to control an amount of brake torque applied by a braking system and an amount of drive torque applied by a powertrain to one or more wheels of the vehicle. The system is operable to detect a leading wheel step event in which a leading wheel encounters an abrupt increase in surface gradient. The system is operable in dependence on the detection of a leading wheel step event to cause brake torque to be applied against drive torque in anticipation of a trailing wheel step event corresponding to the leading wheel step event. DE 10 2017 007122 A1 discloses a method for detecting the direction of travel of a vehicle based on a balance of forces acting on the vehicle.

### Summary of the invention

In view of this, the invention provides a method for recognizing roughness of a road on which a vehicle is traveling, a vehicle, and a computer-readable storage medium, to solve or at least alleviate one or more of the above problems and other problems existing in the prior art.

First, according to a first aspect of the invention, a method for recognizing roughness of a road on which a vehicle is traveling is provided. The method includes the steps of:
A. obtaining a traveling speed of the vehicle on a current road;
B. determining whether the obtained traveling speed is not greater than a preset threshold, and if the obtained traveling speed is not greater than the preset threshold, obtaining operating data of the vehicle at a preset time interval; and
C. determining the roughness of the current road of the vehicle based on a change feature of the obtained operating data.

In the method for recognizing roughness of a road on which a vehicle is traveling according to the invention, optionally, the following step may further be included: before step C, performing filtering processing on the operating data obtained at the preset time interval in step B.

In the method for recognizing roughness of a road on which a vehicle is traveling according to the invention, optionally, the filtering processing is performed, based on sample operating data of the vehicle, on the operating data obtained at the preset time interval, the sample operating data includes corresponding operating data obtained when the vehicle travels on at least two different roads, the at least two different roads are basically horizontal roads, and a friction coefficient for the vehicle obtained when the vehicle travels on one of the roads is greater than that for the vehicle obtained when the vehicle travels on the other road.

In the method for recognizing roughness of a road on which a vehicle is traveling according to the invention, optionally, the following step may further be included: after performing numerical processing on the corresponding operating data obtained when the vehicle travels on the at least two different roads, using operating data obtained after the numerical processing as the sample operating data.

In the method for recognizing roughness of a road on which a vehicle is traveling according to the invention, optionally, the filtering processing includes:
removing a part of the operating data obtained at the preset time interval that is within a range of the sample operating data.

In the method for recognizing roughness of a road on which a vehicle is traveling according to the invention, optionally, in step B, operating data of the vehicle is obtained at least twice periodically at the preset time interval or aperiodically.

In the method for recognizing roughness of a road on which a vehicle is traveling according to the invention, optionally, the preset time interval ranges from 5 ms to 300 ms, and/or the preset threshold is not greater than 5 m/s.

According to the invention, the operating data includes the traveling speed, a vehicle longitudinal acceleration, and a vehicle output torque.

In the method for recognizing roughness of a road on which a vehicle is traveling according to the invention, optionally, the traveling speed is obtained by using a vehicle speed sensor and/or a wheel speed sensor provided on the vehicle, and the vehicle longitudinal acceleration is obtained by using an acceleration sensor provided on the vehicle and/or by performing numerical processing on the obtained traveling speed.

In the method for recognizing roughness of a road on which a vehicle is traveling according to the invention, in step C, a condition of the roughness of the current road of the vehicle is determined, based on a change feature of the obtained vehicle longitudinal acceleration and vehicle output torque, to correspond to an uphill condition, a downhill condition, a condition of being blocked by an obstacle, or a condition of having crossed over an obstacle.

In the method for recognizing roughness of a road on which a vehicle is traveling according to the invention,
when there is basically a continuous decrease in the obtained vehicle longitudinal acceleration, and there is basically no decrease in the obtained vehicle output torque, the condition of the roughness of the current road of the vehicle is determined to correspond to the uphill condition;
when there is basically a continuous increase in the obtained vehicle longitudinal acceleration, and there is basically no increase in the obtained vehicle output torque, the condition of the roughness of the current road of the vehicle is determined to correspond to the downhill condition;
when there is basically a continuous decrease in the obtained vehicle longitudinal acceleration, and there is an increase and then a decrease in the obtained vehicle output torque, the condition of the roughness of the current road of the vehicle is determined to correspond to the condition of being blocked by an obstacle; or
when there is basically a continuous decrease in the obtained vehicle longitudinal acceleration, and there is basically a continuous increase in the obtained vehicle output torque, the condition of the roughness of the current road of the vehicle is determined to correspond to the condition of having crossed over an obstacle.

Furthermore, according to a another aspect of the invention, a vehicle according to claim 8 is provided.

According to a further aspect of the invention, a computer-readable storage medium for storing instructions is provided, where the instructions, when executed, implement the method for recognizing roughness of a road on which a vehicle is traveling as described in any one of the above.

Using the technical solutions according to the invention can quickly, accurately, and efficiently detect roughness of a road on which a vehicle is traveling, and recognize different road conditions such as uphill, downhill, and various obstacles that can or cannot be crossed over. This can improve the low-speed control capability of the vehicle, especially the speed stability of the vehicle when traveling on an uneven road, thereby enhancing the safety performance of the vehicle, and avoiding unexpected traffic accidents. According to the invention, the advantages of good robustness, high practicability, low application cost, and the like are realized, an objective, accurate, and quick determination can be made on the roughness of a road and used as a reliable basis for low-speed control of a vehicle, thereby helping to improve the driving safety performance.

### Brief Description of the Drawings

The technical solutions of the invention will be further described in detail below with reference to accompanying drawing and the embodiments. However, it should be understood that these drawings are designed merely to conceptually illustrate the structural construction described herein and are not necessarily drawn to scale.
FIG. 1 is a schematic flowchart of a first embodiment of a method for recognizing roughness of a road on which a vehicle is traveling according to the invention; and
FIG. 2 is a schematic flowchart of a second embodiment of a method for recognizing roughness of a road on which a vehicle is traveling according to the invention.

### Detailed Description of Embodiments

First, it should be noted that, in the following descriptions, the steps, compositions, working principles, characteristics, and advantages of a method and system for recognizing roughness of a road on which a vehicle is traveling, a vehicle, and a computer-readable storage medium according to the invention are described by way of examples. However, all the descriptions should not be used to limit the invention in any manner. Herein, the technical term "basically" is intended to include an insubstantial deviation associated with a particular quantity, e.g., a deviation range of ± 8%, ± 5%, ± 2%, etc. for a particular value, shape, or positional relationship, etc.

In addition, with respect to any single technical feature described or implied in the embodiments described herein, or any single technical feature shown or implied in the drawings, the disclosure further allows for any combination or deletion of these technical features (or equivalents thereof) to be made without any technical obstacles, and accordingly further embodiments according to the disclosure should be considered to be also within the scope of this disclosure. In addition, general knowledge known to those skilled in the art, such as the working principle, use and data processing of various sensors and other components that can be used to collect vehicle operating data, is not detailed herein.

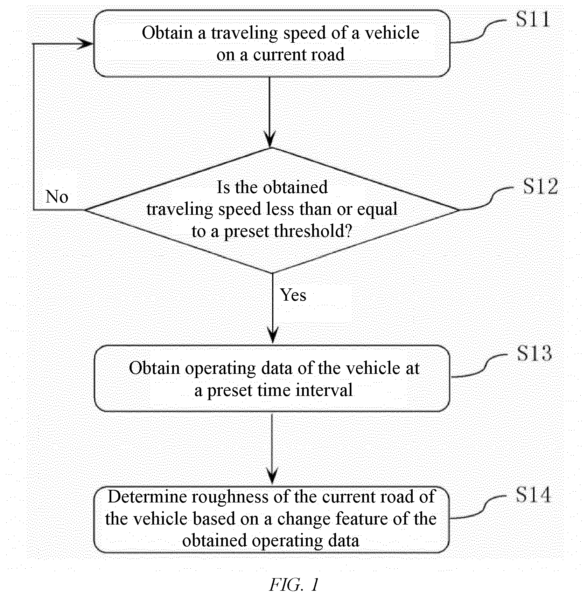

According to a design idea of the invention, there is first provided a method for recognizing roughness of a road on which a vehicle is traveling by using which, a road condition can be recognized accurately and in a timely manner based on features of longitudinal dynamics and vertical dynamics of the vehicle, so that a stable and reliable basis can be provided for optimizing the low-speed control of the vehicle (such as increasing a torque output, braking the vehicle, etc.), thereby raising the safety control level of the vehicle. As an example, a basic procedure of an embodiment of a method for recognizing roughness of a road on which a vehicle is traveling according to the disclosure is first shown in FIG. 1. The solutions of the disclosure are described below through this exemplary embodiment.

As shown in FIG. 1, according to the invention the method for recognizing roughness of a road on which a vehicle is traveling includes the following steps:
First, in step S11, a traveling speed of the vehicle on a current road is obtained during traveling of the vehicle. As an optional case, in actual application, a vehicle speed signal may be collected by using one or more vehicle speed sensors installed on the vehicle and used as the traveling speed. Certainly, a wheel speed signal collected by using one or more wheel speed sensors mounted on a front wheel and/or a rear wheel of the vehicle may be used as the traveling speed. Accordingly, more implementations can be provided.

In step S12, the traveling speed obtained in step S11 is compared with a preset threshold (may be set to such as 3 m/s, 4 m/s, 5 m/s or any other appropriate value, which may be flexibly set or adjusted according to application requirements, thereby limiting a low-speed condition of the vehicle). If it is found that the obtained traveling speed is less than or equal to the preset threshold, it indicates that the vehicle is already in the low-speed condition. Then, in step S13, operating data of the vehicle may be further obtained at a preset time interval. Such operating data may include but is not limited to, for example, the traveling speed, a vehicle longitudinal acceleration, a vehicle output torque, etc., which is used in a subsequent step for analyzing and determining the roughness condition of the road on which the vehicle is currently traveling. Otherwise, if it is found that the obtained traveling speed is greater than the preset threshold, it indicates that the vehicle is currently not in the low-speed condition. Therefore, step S11 may be performed, to continue to obtain the current traveling speed of the vehicle until the vehicle enters the low-speed condition.

The invention allows various possible settings for the preset time interval according to different application requirements. For example, the preset time interval may be optionally set to any suitable value from 5 ms to 300 ms according to a vehicle hardware configuration, a user requirement, a traveling area, or a climatic condition, etc. For example, when the vehicle hardware configuration allowance and high safety requirements are considered, the time interval with a relatively small value may be selected, so as to quickly collect more vehicle operating data for analysis and determination.

It should also be understood that, according to the method of the invention, the preset time interval may be set as required to periodically obtain the operating data of the vehicle two or more times continuously. For example, the operating data of the vehicle may be obtained five times continuously at the same time interval of 10 ms. Alternatively, the preset time interval may be set to aperiodically obtain the operating data of the vehicle two or more times continuously. For example, the operating data of the vehicle may be obtained three times continuously at different time intervals of 8 ms and 5 ms (that is, after obtaining the operating data for the first time, the operating data may be obtained for the second time after an interval of 8 ms, and then the operating data is obtained for the third time after an interval of 5 ms, so that a total of three sets of operating data may be obtained). Such a method is also feasible in some implementations of the method according to the invention.
In different application scenarios, the foregoing examples or more other specific implementations may be flexibly selected and used, which is not limited in the invention.

With continued reference to FIG. 1, in step S14, based on the operating data of the vehicle obtained at the preset time interval as described above, the roughness of the current road of the vehicle is determined by analyzing and determining a change feature of the operating data. For example, a condition of the roughness of the current road may be determined to correspond to an uphill condition, a downhill condition, a condition of being blocked by an obstacle, a condition of having crossed over an obstacle, or another possible type of condition.

For example, as an optional case, the obtained vehicle longitudinal acceleration and vehicle output torque may be used as the operating data of the vehicle. The vehicle longitudinal acceleration may be, for example, obtained by using one or more acceleration sensors on the vehicle, and/or by performing numerical processing (e.g., derivative processing) on the traveling speed obtained in step S11. The vehicle output torque may be obtained from a control apparatus (e.g., a vehicle control unit (VCU), an electronic control unit (ECU), etc.) on the vehicle, and/or by calculating an output parameter of a power apparatus (e.g., an engine, an electronic motor, etc.) on the vehicle. According to the invention, based on the following different change features of the obtained vehicle longitudinal acceleration and vehicle output torque, an actual condition of the roughness of the current road of the vehicle may be analyzed and determined:
a) If there is basically a continuous decrease in the vehicle longitudinal acceleration, and there is basically no decrease (i.e., an increase or unchanged state) in the vehicle output torque, it indicates that there is a slope on the road and the vehicle is traveling up the slope, and therefore the condition of the roughness of the current road is determined to correspond to the uphill condition.
b) If there is basically a continuous increase in the vehicle longitudinal acceleration, and there is basically no increase (i.e., a decrease or unchanged state) in the vehicle output torque, it indicates that there is a slope on the road and the vehicle is traveling down the slope of the road, and therefore the condition of the roughness of the current road is determined to correspond to the downhill condition.
c) If there is basically a continuous decrease in the vehicle longitudinal acceleration, and there is an increase and then a decrease in the vehicle output torque, it indicates that there is a relatively large obstacle (such as a relatively large stone, wood or metal block, or other things) on the road, resulting in that the vehicle cannot pass normally, and therefore the condition of the roughness of the current road may be determined to correspond to the condition of being blocked by an obstacle.
d) If there is basically a continuous decrease in the vehicle longitudinal acceleration, and there is basically a continuous increase in the vehicle output torque, it indicates that there is a general obstacle (such as a speed bump, a relatively small stone, or other things) on the road, but such general obstacle has no impact on the normal passing of the vehicle after the vehicle crosses over the obstacle, and therefore the condition of the roughness of the current road may be determined to correspond to the condition of having crossing over obstacle.

As exemplarily discussed above, according to the method of the invention, through the analysis and determination on the change feature of the operating data of the vehicle, the actual condition of the roughness of the current road of the vehicle can be determined accurately and in a timely manner. This may provide a reliable basis for the low-speed control of the vehicle, thereby helping to improve the vehicle speed stability and safety of the vehicle when the vehicle travels on an uneven road, thereby avoiding damage to the vehicle and personal injury caused by situations of the vehicle such as accelerating when traveling downhill, slipping when traveling uphill, rolling over when hitting an obstacle, etc.

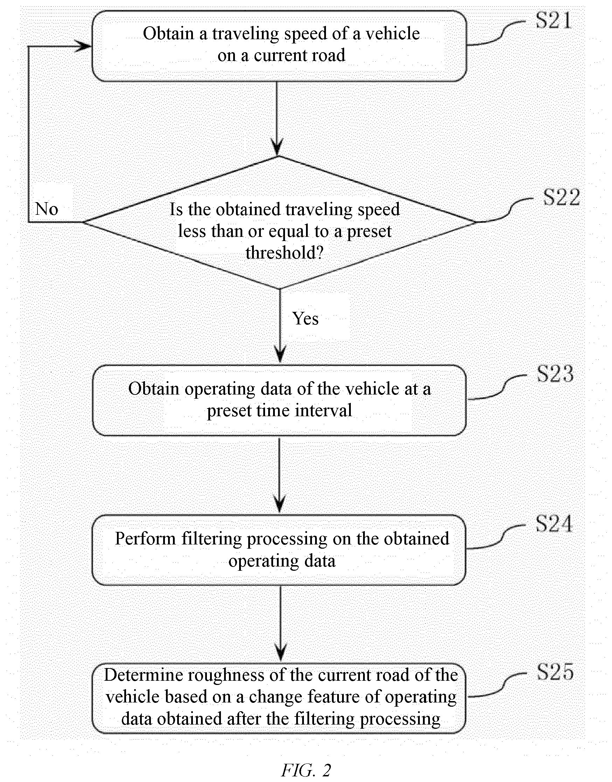

FIG. 2 further shows a processing procedure of another embodiment of a method for recognizing roughness of a road on which a vehicle is traveling according to the invention. Unless specifically described herein, steps S21, S22, S23, and S25 in the second embodiment shown in FIG. 2 are basically respectively the same as or similar to steps S11, S12, S13, and S14 in the first embodiment discussed above, and are therefore not described herein again.

As shown in FIG. 2, in this embodiment of the method for recognizing roughness of a road on which a vehicle is traveling, step S24 is added between step S23 and step S25, to perform filtering processing on the operating data obtained at the preset time interval in step S23, thereby optimizing the data. Particularly, some unnecessary data can be directly removed, which not only helps to improve efficiency and reduce a result feedback time, but also helps to ensure and improve accuracy of the detection and recognition result, thereby preventing false determination or misoperation due to interference of some unnecessary data.

Only as an exemplary example, the sample operating data of the vehicle may be established in advance, to be used for the above filtering processing. For the sample operating data, the vehicle may be driven to travel on two or more different roads (i.e., sample roads), to obtain the corresponding operating data of the vehicle (e.g., the traveling speed, the vehicle longitudinal acceleration, the vehicle output torque, etc.). These different roads are basically horizontal roads, but each has a different friction coefficient. In other words, a road friction coefficient for the vehicle obtained when the vehicle travels on one of the roads is greater than that for the vehicle obtained when the vehicle travels on the other road.

As an optional method, a horizontal ceramic tile road and a horizontal gravel road may be both selected as the sample roads. Due to obvious differences in material characteristics of the roads, the former has a smaller road friction coefficient, while the latter has a larger road friction coefficient. For an asphalt road or a cement road where a vehicle usually travels, a road friction coefficient for the vehicle in this case is basically between the larger and smaller road friction coefficients of the above two sample roads. Based on these two sample roads, the sample operating data of the vehicle can be constructed, which may include all the vehicle operating data obtained based on the above two roads. In this way, when the filtering processing is performed on the operating data of the vehicle obtained in step S23, a part of the data that is within a range of the sample operating data may be directly removed. The filtered-out data basically belongs to a normal range of data for common horizontal roads and has a relatively low or unnecessary analysis reference value (i.e., shielding processing is performed on a normal fluctuation bandwidth of the operating data of the vehicle, which effectively eliminates an impact of road noise generated when the vehicle travels on a normal road and the driver's active intervention). In addition, the filtering settings has taken into account two extreme road conditions with a smaller road friction coefficient and a larger road friction coefficient, which can eliminate as much unnecessary redundant data as reasonably possible, thereby optimizing the efficiency and accuracy of data processing.

For another example, in some implementations, it may be further considered to perform numerical processing on the established sample operating data, and then use processed sample operating data for the above data filtering processing. For example, in short, the established sample operating data may be directly multiplied by an amplification factor K (such as 1.05, 1.2, 2, or any other appropriate value set as required), to expand data coverage of the sample operating data. This allows to filter out relatively more operating data of the vehicle, thereby helping to further improve the processing efficiency and accuracy. Certainly, the method of the disclosure also allows using any other numerical processing methods to carry out more possible optimizations on the sample operating data.

It should also be noted that, in actual application, the sample operating data may be stored in any suitable component on the vehicle, such as the VCU or the ECU on the vehicle or a storage component provided separately for the sample operating data, which is not limited in the disclosure.

According to the design idea of the invention, there is further provided a system for recognizing roughness of a road on which a vehicle is traveling, which may include a processor and a memory for storing instructions. When the instructions are executed, the processor in the system may implement the method for recognizing roughness of a road on which a vehicle is traveling according to the disclosure. This can realize these positive, significant, and beneficial technical advantages of the solutions of the disclosure, especially can optimize and improve the low-speed control of the vehicle, thereby providing strong guarantee for personal safety and vehicle safety, and avoiding unexpected accidents. In specific application, a deceleration control system may be integrated into an autonomous driving system of the vehicle, or it may be provided on the vehicle as a separate part or provided in an existing component such as the VCU, the ECU, etc.

In addition, according to a technical solution of the invention, there is further provided a vehicle, which may be equipped with the foregoing system for recognizing roughness of a road on which a vehicle is traveling as described above, or the method for recognizing roughness of a road on which a vehicle is traveling as described above may be used for the vehicle. It should be understood that, the vehicle according to the invention may include but is not limited to various types of vehicles such as a fuel vehicle, a battery electric vehicle, a hybrid vehicle, etc.

In addition, the invention further provides a computer-readable storage medium for storing instructions. The instructions, when executed, can implement the method for recognizing roughness of a road on which a vehicle is traveling according to the invention. The computer-readable storage medium may be any type of component, module or apparatus that can store instructions, which may include but is not limited to a read-only memory (ROM), a random access memory (RAM), an erasable programmable read-only memory (EPROM), etc.

The method for recognizing roughness of a road on which a vehicle is traveling, the vehicle, and the computer-readable storage medium according to the invention are merely illustrated in detail above by way of examples. These examples are only for the purpose of illustrating the principle of the invention and the implementations thereof, rather than limiting the scope of the invention, which is defined by the appended claims.

## Claims

1. A method for recognizing roughness of a road on which a vehicle is traveling, comprising the steps of:
A. obtaining (S11; S21) a traveling speed of the vehicle on a current road;
B. determining (S12; S22) whether the obtained traveling speed is not greater than a preset threshold, and if the obtained traveling speed is not greater than the preset threshold, obtaining (S13; S23) operating data of the vehicle at a preset time interval, the operating data comprising the traveling speed, a vehicle longitudinal acceleration, and a vehicle output torque; and
C. determining (S14; S25) a condition of the roughness of the current road of the vehicle based on a change feature of the obtained vehicle longitudinal acceleration and vehicle output torque to correspond to an uphill condition, a downhill condition, a condition of being blocked by an obstacle, or a condition of having crossed over an obstacle,
wherein:
when there is basically a continuous decrease in the obtained vehicle longitudinal acceleration, and there is basically no decrease in the obtained vehicle output torque, the condition of the roughness of the current road of the vehicle is determined to correspond to the uphill condition;
when there is basically a continuous increase in the obtained vehicle longitudinal acceleration, and there is basically no increase in the obtained vehicle output torque, the condition of the roughness of the current road of the vehicle is determined to correspond to the downhill condition;
when there is basically a continuous decrease in the obtained vehicle longitudinal acceleration, and there is an increase and then a decrease in the obtained vehicle output torque, the condition of the roughness of the current road of the vehicle is determined to correspond to the condition of being blocked by an obstacle; or
when there is basically a continuous decrease in the obtained vehicle longitudinal acceleration, and there is basically a continuous increase in the obtained vehicle output torque, the condition of the roughness of the current road of the vehicle is determined to correspond to the condition of having crossed over an obstacle.

2. The method for recognizing roughness of a road on which a vehicle is traveling according to claim **1,** further comprising the step of: before step C, performing (S24) filtering processing on the operating data obtained at the preset time interval in step B.

3. The method for recognizing roughness of a road on which a vehicle is traveling according to claim 2, wherein the filtering processing is performed, based on sample operating data of the vehicle, on the operating data obtained at the preset time interval, the sample operating data comprises corresponding operating data obtained when the vehicle travels on at least two different roads, the at least two different roads are basically horizontal roads, and a friction coefficient for the vehicle obtained when the vehicle travels on one of the roads is greater than that for the vehicle obtained when the vehicle travels on the other road.

4. The method for recognizing roughness of a road on which a vehicle is traveling according to claim 3, further comprising the step of: after performing numerical processing on the corresponding operating data obtained when the vehicle travels on the at least two different roads, using operating data obtained after the numerical processing as the sample operating data.

5. The method for recognizing roughness of a road on which a vehicle is traveling according to claim 3, wherein the filtering processing comprises: removing a part of the operating data obtained at the preset time interval that is within a range of the sample operating data.

6. The method for recognizing roughness of a road on which a vehicle is traveling according to any one of claims 1 to 5, wherein in step B, operating data of the vehicle is obtained at least twice periodically at the preset time interval or aperiodically.

7. The method for recognizing roughness of a road on which a vehicle is traveling according to any one of claims 1 to 6, wherein the preset time interval ranges from 5 ms to 300 ms, and/or the preset threshold is not greater than 5 m/s.

8. A vehicle with a controller configured for carrying out the method for recognizing roughness of a road on which a vehicle is traveling according to any one of claims 1 to 7.

9. A computer-readable storage medium for storing instructions, wherein the instructions, when executed, implement the method for recognizing roughness of a road on which a vehicle is traveling according to any one of claims 1 to 7.

## Patentansprüche

1. Verfahren zur Erkennung der Rauheit einer Straße, auf der ein Fahrzeug fährt, das die folgenden Schritte umfasst:
A. Erhalten (S11; S21) einer Fahrgeschwindigkeit des Fahrzeugs auf einer aktuellen Straße;
**B.** Bestimmen (S12; S22), ob die erhaltene Fahrgeschwindigkeit nicht größer als eine voreingestellte Schwelle ist, und wenn die erhaltene Fahrgeschwindigkeit nicht größer als die voreingestellte Schwelle ist, Erhalten (S13; S23) von Betriebsdaten des Fahrzeugs bei einem voreingestellten Zeitintervall, wobei die Betriebsdaten die Fahrgeschwindigkeit, eine Fahrzeuglängsbeschleunigung und ein Fahrzeugausgangsdrehmoment umfassen; und
C. Bestimmen (S14; S25) eines Rauheitszustands der aktuellen Straße des Fahrzeugs basierend auf einem Änderungsmerkmal der erhaltenen Fahrzeuglängsbeschleunigung und des Fahrzeugausgangsdrehmoments, um einer Bergauf-Bedingung, einer Bergab-Bedingung, einer Bedingung des Blockiertseins durch ein Hindernis oder einer Bedingung des Passierens eines Hindernisses zu entsprechen,
wobei:
wenn es praktisch eine kontinuierliche Verringerung in der erhaltenen Fahrzeuglängsbeschleunigung gibt und es praktisch keine Verringerung im erhaltenen Fahrzeugausgangsdrehmoment gibt, der Rauheitszustand der aktuellen Straße so bestimmt wird, dass er der Bergauf-Bedingung entspricht;
wenn es praktisch eine kontinuierliche Erhöhung in der erhaltenen Fahrzeuglängsbeschleunigung gibt und es praktisch keine Erhöhung im erhaltenen Fahrzeugausgangsdrehmoment gibt, der Rauheitszustand der aktuellen Straße so bestimmt wird, dass er der Bergab-Bedingung entspricht;
wenn es praktisch eine kontinuierliche Verringerung in der erhaltenen Fahrzeuglängsbeschleunigung gibt und es eine Erhöhung und danach eine Verringerung im erhaltenen Fahrzeugausgangsdrehmoment gibt, der Rauheitszustand der aktuellen Straße so bestimmt wird, dass er der Bedingung des Blockiertseins durch ein Hindernis entspricht; oder
wenn es praktisch eine kontinuierliche Verringerung in der erhaltenen Fahrzeuglängsbeschleunigung gibt und es praktisch eine kontinuierliche Erhöhung im erhaltenen Fahrzeugausgangsdrehmoment gibt, der Rauheitszustand der aktuellen Straße so bestimmt wird, dass er der Bedingung des Passierens eines Hindernisses entspricht;

2. Verfahren zur Erkennung der Rauheit einer Straße, auf der ein Fahrzeug fährt, nach Anspruch 1, das ferner den folgenden Schritt umfasst: vor Schritt C, Durchführen (S24) einer Filterungsverarbeitung auf den beim voreingestellten Zeitintervall in Schritt B erhaltenen Betriebsdaten.

3. Verfahren zur Erkennung von Rauheit einer Straße, auf der ein Fahrzeug fährt, nach Anspruch 2, wobei die Filterungsverarbeitung, basierend auf beispielhaften Betriebsdaten des Fahrzeugs, auf den bei dem voreingestellten Zeitintervall erhaltenen Betriebsdaten des Fahrzeugs durchgeführt wird, wobei die beispielhaften Betriebsdaten Betriebsdaten umfassen, die erhalten werden, wenn das Fahrzeug auf mindestens zwei unterschiedlichen Straßen fährt, wobei die mindestens zwei unterschiedlichen Straßen praktisch horizontale Straßen sind und wobei ein Reibungskoeffizient für das Fahrzeug, der erhalten wird, wenn das Fahrzeug auf einer Straße fährt, größer ist als der für das Fahrzeug, der erhalten wird, wenn das Fahrzeug auf der anderen Straße fährt.

4. Verfahren zur Erkennung der Rauheit einer Straße, auf der ein Fahrzeug fährt, nach Anspruch 3, das ferner den folgenden Schritt umfasst: nach Durchführen numerischer Verarbeitung auf den entsprechenden Betriebsdaten, die erhalten werden, wenn das Fahrzeug auf den mindestens zwei unterschiedlichen Straßen fährt, Verwenden von Betriebsdaten, die nach der numerischen Verarbeitung erhalten werden, als die beispielhaften Betriebsdaten.

5. Verfahren zur Erkennung der Rauheit einer Straße, auf der ein Fahrzeug fährt, nach Anspruch 3, wobei die Filterungsverarbeitung Folgendes umfasst: Entfernen eines Teils der Betriebsdaten, die am voreingestellten Zeitintervall erhalten werden, die innerhalb eines Bereichs der beispielhaften Betriebsdaten sind.

6. Verfahren zur Erkennung der Rauheit einer Straße, auf der ein Fahrzeug fährt, nach einem der Ansprüche 1 bis 5, wobei in Schritt B Betriebsdaten des Fahrzeugs mindestens zweimal periodisch zum voreingestellten Zeitintervall oder aperiodisch erhalten werden.

7. Verfahren zur Erkennung der Rauheit einer Straße, auf der ein Fahrzeug fährt, nach einem der Ansprüche 1 bis 6, wobei das voreingestellte Zeitintervall von 5 ms bis 300 ms reicht und/oder die voreingestellte Schwelle nicht größer als 5 m/s ist.

8. Fahrzeug mit einer Steuerung, die ausgelegt ist zum Ausführen des Verfahrens zur Erkennung der Rauheit einer Straße, auf der ein Fahrzeug fährt, nach einem der Ansprüche 1 bis 7.

9. Computerlesbares Speichermedium zum Speichern von Anweisungen, die, wenn ausgeführt, das Verfahren zur Erkennung der Rauheit einer Straße, auf der ein Fahrzeug fährt, nach einem der Ansprüche 1 bis 7 implementieren.

## Revendications

1. Procédé pour reconnaître l'irrégularité d'une route sur laquelle un véhicule se déplace, comprenant les étapes de :
A. l'obtention (S11 ; S21) d'une vitesse de déplacement du véhicule sur une route actuelle ;
B. la détermination (S12 ; S22) du fait que la vitesse de déplacement obtenue est, ou n'est pas, supérieure à un seuil prédéfini, et, si la vitesse de déplacement obtenue n'est pas supérieure au seuil prédéfini, l'obtention (S13 ; S23) de données de fonctionnement du véhicule à un intervalle de temps prédéfini, les données de fonctionnement comprenant la vitesse de déplacement, une accélération longitudinale de véhicule, et un couple de sortie de véhicule ; et
C. la détermination (S14 ; S25) d'une condition de l'irrégularité de la route actuelle du véhicule sur la base d'une caractéristique de changement de l'accélération longitudinale de véhicule et du couple de sortie de véhicule obtenus pour correspondre à une condition de montée, une condition de descente, une condition consistant à être bloqué par un obstacle, ou une condition consistant à être passé par-dessus un obstacle,
dans lequel :
lorsqu'il y a essentiellement une réduction continue de l'accélération longitudinale de véhicule obtenue, et il n'y a essentiellement aucune réduction du couple de sortie de véhicule obtenu, la condition de l'irrégularité de la route actuelle du véhicule est déterminée correspondre à la condition de montée ;
lorsqu'il y a essentiellement une augmentation continue de l'accélération longitudinale de véhicule obtenue, et il n'y a essentiellement aucune augmentation du couple de sortie de véhicule obtenu, la condition de l'irrégularité de la route actuelle du véhicule est déterminée correspondre à la condition de descente ;
lorsqu'il y a essentiellement une réduction continue de l'accélération longitudinale de véhicule obtenue, et il y a une augmentation et puis une réduction du couple de sortie de véhicule obtenu, la condition de l'irrégularité de la route actuelle du véhicule est déterminée correspondre à la condition consistant à être bloqué par un obstacle ; ou
lorsqu'il y a essentiellement une réduction continue de l'accélération longitudinale de véhicule obtenue, et il y a essentiellement une augmentation continue du couple de sortie de véhicule obtenu, la condition de l'irrégularité de la route actuelle du véhicule est déterminée correspondre à la condition consistant à être passé par-dessus un obstacle.

2. Procédé pour reconnaître l'irrégularité d'une route sur laquelle un véhicule se déplace selon la revendication 1, comprenant en outre l'étape de : avant l'étape C, la réalisation (S24) d'un traitement de filtrage sur les données de fonctionnement obtenues à l'intervalle de temps prédéfini dans l'étape B.

3. Procédé pour reconnaître l'irrégularité d'une route sur laquelle un véhicule se déplace selon la revendication 2, dans lequel le traitement de filtrage est réalisé, sur la base de données de fonctionnement échantillons du véhicule, sur les données de fonctionnement obtenues à l'intervalle de temps prédéfini, les données de fonctionnement échantillons comprennent des données de fonctionnement correspondantes obtenues lorsque le véhicule se déplace sur au moins deux routes différentes, les au moins deux routes différentes sont essentiellement des routes horizontales, et un coefficient de frottement pour le véhicule obtenu lorsque le véhicule se déplace sur une des routes est supérieur à celui pour le véhicule obtenu lorsque le véhicule se déplace sur l'autre route.

4. Procédé pour reconnaître l'irrégularité d'une route sur laquelle un véhicule se déplace selon la revendication 3, comprenant en outre l'étape de : après la réalisation d'un traitement numérique sur les données de fonctionnement correspondantes obtenues lorsque le véhicule se déplace sur les au moins deux routes différentes, l'utilisation de données de fonctionnement obtenues après le traitement numérique en tant que données de fonctionnement échantillons.

5. Procédé pour reconnaître l'irrégularité d'une route sur laquelle un véhicule se déplace selon la revendication 3, dans lequel le traitement de filtrage comprend : l'élimination d'une partie des données de fonctionnement obtenues à l'intervalle de temps prédéfini qui est dans les limites d'une plage des données de fonctionnement échantillons.

6. Procédé pour reconnaître l'irrégularité d'une route sur laquelle un véhicule se déplace selon l'une quelconque des revendications 1 à 5, dans lequel, dans l'étape B, des données de fonctionnement du véhicule sont obtenues au moins deux fois, périodiquement à l'intervalle de temps prédéfini ou apériodiquement.

7. Procédé pour reconnaître l'irrégularité d'une route sur laquelle un véhicule se déplace selon l'une quelconque des revendications 1 à 6, dans lequel l'intervalle de temps prédéfini varie de 5 ms à 300 ms, et/ou le seuil prédéfini n'est pas supérieur à 5 m/s.

8. Véhicule avec une unité de commande configurée pour effectuer le procédé pour reconnaître l'irrégularité d'une route sur laquelle un véhicule se déplace selon l'une quelconque des revendications 1 à 7.

9. Support de stockage lisible par ordinateur pour stocker des instructions, dans lequel les instructions, lorsqu'elles sont exécutées, mettent en œuvre le procédé pour reconnaître l'irrégularité d'une route sur laquelle un véhicule se déplace selon l'une quelconque des revendications 1 à 7.
